# EUROPÄISCHE PATENTSCHRIFT

(11) **EP 3 612 448 B1**
(45) Veröffentlichungstag und Bekanntmachung des Hinweises auf die Patenterteilung: **05.05.2021**
(21) Anmeldenummer: 18701734.8
(22) Anmeldetag: 24.01.2018
(51) Int. Cl.: B65B 1/16, A61J 3/07, B65B 1/36, B65B 1/10, G01F 11/24

(54) **VORRICHTUNG ZUM DOSIEREN VON FÜLLGUT**
DEVICE FOR DOSING A MATERIAL TO BE FILLED
MACHINE À DOSER UN MATÉRIAU DE REMPLISSAGE

(30) Priorität: 13.03.2017 DE 102017204083
(43) Veröffentlichungstag der Anmeldung: 26.02.2020
(73) Patentinhaber: Syntegon Technology GmbH, 71332 Waiblingen (DE)
(72) Erfinder: WICK, Wolfgang, 71686 Remseck (DE); RUNFT, Werner, 71364 Winnenden (DE); SCHLIPF, Jens, 71691 Freiberg A. N. (DE); BOEHRINGER, Walter, 73630 Remshalden (DE)
(74) Vertreter: DREISS Patentanwälte PartG mbB
(86) Internationale Anmeldenummer: PCT/EP2018/051678
(87) Internationale Veröffentlichungsnummer: WO 2018/166682

(56) Entgegenhaltungen:
- EP-A1- 2 428 450
- DE-A1-102011 085 283
- DE-U1-202007 014 478
- US-A- 4 709 837
- US-A1- 2005 023 297
- US-A1- 2011 253 511

## Beschreibung

### Stand der Technik

Die vorliegende Erfindung betrifft eine Vorrichtung zum Abfüllen von insbesondere pulverförmigem Füllgut.

Eine gattungsgemäße Vorrichtung ist aus der DE 102011085283 A1 bekannt. Hierbei werden mehrere Dosierkammern eines Dosierrads über ein gemeinsames Bauteil gebildet. Zwischen Hülsenansätzen und Öffnungen ist ein Filter angeordnet, der gegebenenfalls ausgetauscht werden kann, wenn sich der Filter beispielsweise durch Füllgut zusetzt und sich nicht mehr ausreichend reinigen lässt. Hierzu ist in der Regel die Fülleinheit zu zerlegen und wieder zusammen zu bauen, was mit einem gewissen Aufwand verbunden ist Weitere Druckschriften, die Vorrichtungen zum Abfüllen von pulverförmigem Füllgut betreffen, werden z.B. in DE 10 2011 085283 A1 und DE 20 2007 014478 U1 beschrieben.

Es ist Aufgabe der Erfindung, ohne größeren Aufwand und Zeitverlust den Filter wieder in einen funktionsfähigen Zustand zu bringen. Diese Aufgabe wird gelöst durch die Merkmale des unabhängigen Anspruchs.

### Vorteile der Erfindung

Die erfindungsgemäße Vorrichtung gemäß den Merkmalen des unabhängigen Anspruchs hat demgegenüber den Vorteil, dass der Filter schnell und ohne Auseinanderbauen der Fülleinheit wieder in einen ordnungsgemäßen Zustand überführt werden kann. Dies wird erfindungsgemäß dadurch erreicht, dass zumindest ein Transportmittel vorgesehen ist, welches den Filter relativ zu der Dosierkammer bewegt, so dass ein weiterer, funktionsfähiger Bereich des Filters an die Unterseite der Dosierkammer gelangt. Durch das Weiterbewegen des Filters werden beispielsweise mit Pulverpartikeln verschlossene Filterbereiche durch frische ungebrauchte Filterbereiche ersetzt. Dies kann beispielsweise durch ein Bewegen oder Weiterdrehen einer Welle von außen erfolgen, ohne dass das Füllrad zerlegt werden muss.

In einer zweckmäßigen Weiterbildung ist vorgesehen, dass der Filter in einer radialen und/oder axialen Richtung bezogen auf eine Rotationsachse des Dosierrads verschiebbar ausgebildet ist. Dadurch lassen sich gezielt neue funktionsfähige Filterbereiche unter die Dosierkammern bringen.

In einer zweckmäßigen Weiterbildung ist ein Spannmittel für den Filter vorgesehen. Dadurch spannt der Filter an jeder Dosierkammer gleich stark, sodass sich keine Falten bilden, welche den Dosiervorgang behindern könnten.

In einer zweckmäßigen Weiterbildung ist als Transportmittel zumindest eine Rolle, vorzugsweise eine Abwickelrolle und/oder eine Aufwickelrolle vorgesehen. Zu Beginn des Prozesses können hier mehrere Filterlagen aufgewickelt sein, sodass genügend neue, funktionstüchtige Filterbereiche auch nach einer Vielzahl von Dosiervorgängen zur Verfügung stehen. Besonders bevorzugt ist der Filter mit den Rollen verbunden, so dass eine entsprechende Filterbewegung durch Betätigung der Rollen erreicht werden kann.

In einer zweckmäßigen Weiterbildung ist die Zuführung bewegbar ausgebildet. Im Normalbetrieb drückt die Zuführung den Filter gegen die Unterseite der Dosierkammer. Bei der Verschiebung des Filters hingegen übt die Zuführung keinen Druck aus, um eine Bewegung des Filters zu ermöglichen. Indem der Filter bündig mit der Unterseite der Dosierkammer abschließt, werden präzise Füllvorgänge ermöglicht.

In einer zweckmäßigen Weiterbildung ist eine Verzahnung zwischen den beiden Rollen vorgesehen. Dadurch wird ein synchroner Betrieb der beiden Rollen ermöglicht. Außerdem erübrigt sich eine zusätzliche Feststelleinrichtung für die Rollen, da lediglich eine Rolle fixiert werden muss, um den Weitertransport des Filters zu verhindern.

In einer zweckmäßigen Weiterbildung ist das Spannmittel frei beweglich, vorzugsweise über eine kardanische Aufhängung, mit dem Dosierrad verbunden. Besonders bevorzugt umfasst das Spannmittel zumindest eine Feder. Dadurch können eventuelle Montagefehler oder Inhomogenitäten des Filters ausgeglichen werden.

In einer zweckmäßigen Weiterbildung ist der Filter zumindest bandförmig, insbesondere mehrere Filterbänder umfassend ausgebildet. Mehrere und deshalb schmälere Bänder haben den Vorteil, dass sich Inhomogenitäten im Filter, Montagefehler oder Fertigungsungenauigkeiten auf die Gleichmäßigkeit der Filterspannung nicht so stark auswirken.

Weitere zweckmäßige Weiterbildungen ergeben sich aus weiteren abhängigen Ansprüchen und der Beschreibung.

### Zeichnung

Ausführungsbeispiele der erfindungsgemäßen Vorrichtung sind in der Zeichnung dargestellt und werden nachfolgend näher beschrieben.

### Es zeigen:

- Figur 1: eine schematische Draufsicht einer Vorrichtung zum Abfüllen von Füllgut,
- Figur 2: eine schematische Schnittansicht durch eine Füllvorrichtung,
- Figur 3: eine Schnittansicht durch ein Dosierrad in einer ersten Position beim Abfüllvorgang,
- Figur 4: eine Schnittansicht durch das Dosierrad von Figur 3 in einer zweiten Position, in der der Filter weiter transportiert wird,
- Figur 5: eine perspektivische Ansicht auf das Dosierrad ohne Dosierhülle,
- Figur 6: eine perspektivische Ansicht auf das Dosierrad nach Figur 5 mit Dosierhülle,
- Figur 7: eine perspektivische Ansicht von oben auf die Vorrichtung zum Abfüllen von Füllgut gemäß Figur 1 sowie
- Figur 8: eine schematische Schnittansicht durch das Dosierrad eines weiteren Ausführungsbeispiels.

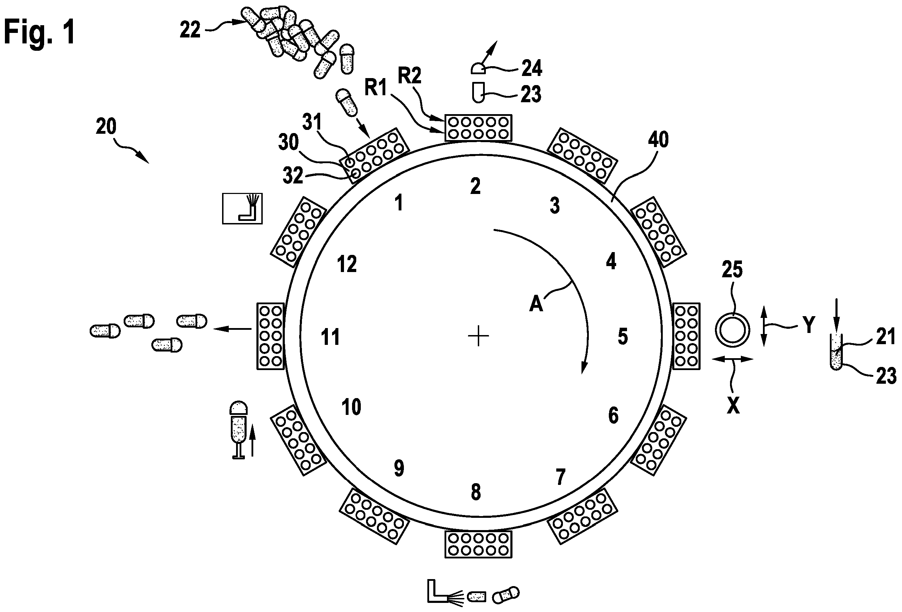

Figur 1 zeigt eine Gesamtübersicht der Vorrichtung 20, welche ein Stationsrad 40 mit insgesamt zwölf Stationen 1 bis 12 umfasst. Im Stationsrad 40 sind insgesamt zwölf Kapselhalter 30 entlang des Umfangs angeordnet, wobei jeder Kapselhalter 30 eine Vielzahl von Aufnahmen 31, 32 zur Aufnahme von Kapseln 22 aufweist. Die Aufnahmen 31, 32 sind dabei in jedem Kapselhalter 30 in zwei Reihen, nämlich einer ersten Reihe R1 und einer zweiten Reihe R2 parallel zueinander angeordnet. Eine Rotationsrichtung des Stationsrads 40 ist durch den Pfeil A gekennzeichnet.

Die Stationen des Stationsrads 40 sind dabei wie folgt. An der Station 1 werden leere, geschlossene Kapseln, welche ein Kapselunterteil 23 und ein Kapseloberteil 24 umfassen, von einem Vorrat zugeführt. Die Kapseln werden dabei einzeln jeweils in eine Aufnahme 31 des Kapselhalters 30 eingeführt.

An der Station 2 werden die Kapseln 22 geöffnet, d.h., das Kapseloberteil 24 wird vom Kapselunterteil 23 entfernt, so dass das Kapselunterteil 23 in der Aufnahme 31 verbleibt.

Es sei angemerkt, dass das Zuführen und Öffnen der Kapseln auch an der gleichen Station erfolgen kann. Auch kann z.B. an Station 1 die erste Reihe und an Station 2 die zweite Reihe mit Kapseln aufgefüllt werden, und an den Stationen vorzugsweise auch gleich geöffnet werden.

Die Stationen 3 und 4 sind in diesem Ausführungsbeispiel nicht besetzt.

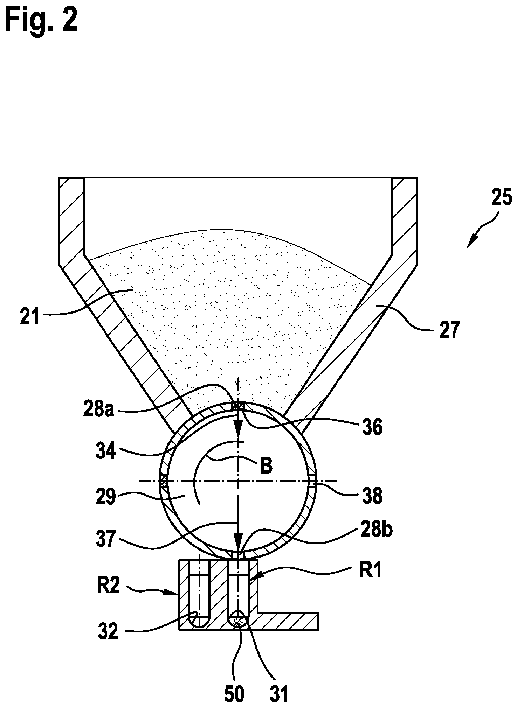

Die Station 5 ist eine Füllstation, in welcher die geöffneten Kapseln 22 gefüllt werden. Hierzu ist eine Füllvorrichtung 25 vorgesehen, welche im Detail in den weiteren Figuren gezeigt ist. Die Füllvorrichtung 25 gemäß Figur 2 umfasst ein Dosierrad 26 und einen Vorratsbehälter 27, in welchem das pulverförmige Füllgut 21 angeordnet ist. Die Füllvorrichtung 25 könnte beispielsweise eine hier nicht sichtbare Bewegungsvorrichtung umfassen, welche die Füllvorrichtung 25 in zwei Richtungen, nämlich eine erste Richtung X und eine zweite Richtung Y bewegt.

Figur 2 zeigt dabei eine Startposition des Befüllvorgangs, wobei die Füllvorrichtung 25 über einer Aufnahme 31 der ersten Reihe R1 der Aufnahmen angeordnet ist und somit in einer ersten Füllstellung positioniert ist. Das Dosierrad 26 weist eine erste Dosierkammer 28a und eine zweite Dosierkammer 28b auf. In der in Figur 2 dargestellten Stellung wird an einer Aufnahmeposition in die erste Dosierkammer 28a mittels Vakuum eine kleine Füllmenge aus dem Vorratsbehälter 27 angesaugt. Danach dreht sich das Dosierrad 29 in Richtung des Pfeils B um 180° und gibt die kleine Füllmenge an einer Abgabeposition mittels Druckluft ab, so dass die Füllmenge in das Kapselunterteil 23 hinein fällt. Gegebenenfalls führt die Füllvorrichtung 25 dann eine Bewegung aus, so dass die Abgabeposition somit in einer zweiten Füllstellung über einer Aufnahme 32 der zweiten Reihe R2 positioniert ist. Eine zweite Füllmenge wird dann in gleicher Weise in das Kapselunterteil 23 in der Aufnahme 32 der zweiten Reihe R2 eingefüllt. Besonders bevorzugt kann das Dosierrad 29 auch vier in einem Winkel von 90° zueinander angeordnete Dosierkammern aufweisen, wobei das Dosierrad 26 zur Aufnahme und Abgabe des Füllguts 21 hierbei jeweils um 90° weitergedreht wird. Es sei angemerkt, dass alternativ die Füllvorrichtung auch mehrere Fülleinheiten in Reihe umfassen kann, wobei die Anzahl der Fülleinheiten gleich der Anzahl der Aufnahmen 31, 32 in der Reihe R1 und R2 ist oder ein Vielfaches oder eine Teilmenge davon ist. In Figur 2 ist außerdem eine Reinigungsposition 38 gezeigt, die um 90° versetzt von der Abfüllposition der Kapsel 22 entlang der Drehrichtung B ist.

Gegebenenfalls kann auch an der Station 6 noch eine weitere Füllvorrichtung vorgesehen sein, so dass beispielsweise die erste Füllvorrichtung an der Station 5 eine Teilfüllung vornimmt und die zweite Füllvorrichtung 6 eine abschließende Endbefüllung und genaue Dosierung der Füllmenge vornimmt.

An der Station 7 kann beispielsweise eine Wiegevorrichtung vorgesehen sein, um die gefüllten Kapseln zu überprüfen.

Die Station 8 ist eine Auswurfstation, bei der beschädigte oder nicht gefüllte oder falsch gefüllte Kapseln ausgesondert werden können.

An der Station 9 werden die Kapseloberteile 24 wieder über die nun gefüllten Kapselunterteile 23 positioniert und in der Station 10 werden die Kapseln wieder verschlossen. Dies kann beispielsweise durch Absenken der Kapseloberteile auf die Kapselunterteile erfolgen.

Die Station 11 ist die Abgabestation der gefüllten Kapseln und die Station 12 ist eine Reinigungsstation, in welcher die Kapselhalter 30 gereinigt werden, um Fehlbefüllungen bzw. falsches Aufnehmen der Kapseln in die Aufnahmen 31 zu vermeiden.

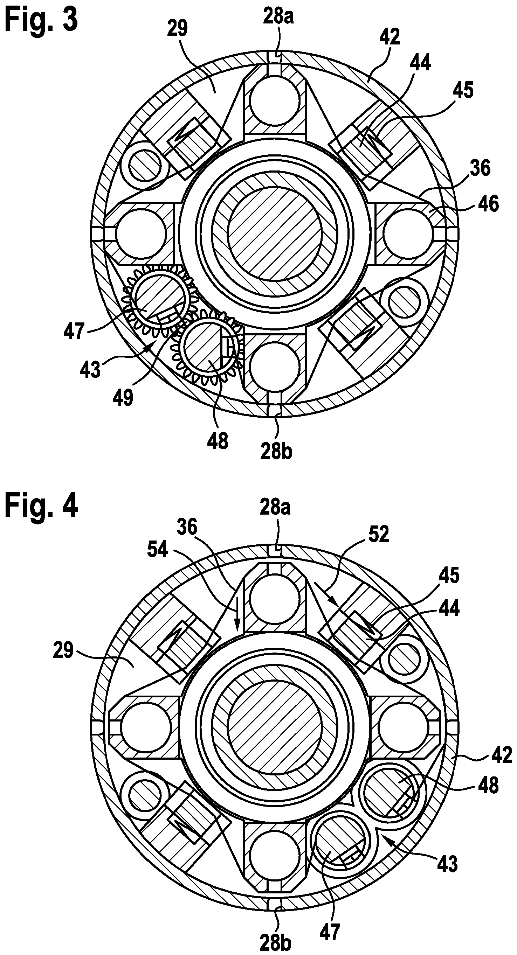

In Figur 3 ist in dem Schnitt durch das Dosierrad 29 dessen Aufbau genauer gezeigt. Die äußere Hülle des Dosierrads 29 wird durch eine Dosierhülle 42 gebildet. Diese Dosierhülle 42 ist durchbrochen durch mehrere Dosierkammern 28 a, 28 b. Im Ausführungsbeispiel sind die Dosierkammern 28 a, 28 b jeweils um 90° versetzt angeordnet. Unter jeder Dosierungkammer 28 a, 28 b ist jeweils eine Zuführung 46 für ein gasförmiges Medium wie beispielsweise Luft vorgesehen. Diese Zuführung 46 weist einen größeren runden Querschnitt auf, der sich bezogen auf die Drehachse des Dosierrads 29 in axialer Richtung erstreckt. Nach außen in radialer Richtung zweigen von der Zuführung 46 jeweils Kanäle zu den Dosierkammern 28 a, 28 b in radialer Richtung nach außen ab. Der Querschnitt des jeweiligen Kanals entspricht dem der Dosierkammer 28 a, 28 b. Zwischen dem Kanal bzw. der Zuführung 46 und der Unterseite der Dosierkammer 28 a, 28 b befindet sich ein Filter 36. Der Filter 36 ist hierbei so ausgebildet, dass er zum einen in der Dosierkammer 28 a, 28 b befindliches Füllgut 21 dort zurückhält. Andererseits ist der Filter 36 durchlässig für das gasförmige Medium, welches durch die Zuführung 46 zu den jeweiligen Dosierkammern 28 a, 28 b, gelangen kann.

Wird das Füllgut 21 aus dem Vorratsbehälter 27 in die entsprechende Dosierkammer 28 a, 28 b eindosiert, so wird ein Unterdruck bzw. ein Vakuum in der Zuführung 46 erzeugt, so dass das Füllgut 21 in die Dosierkammer 28 a, 28 b eingesaugt wird. Anschließend wird das Füllgut 21 am äußeren Rand des Vorratsbehälters 27 durch entsprechende Drehung des Dosierrads 29 abgestreift. Das Dosierrad 29 wird weiter in die Entleerstellung gefahren. In der Entleerstellung wie beispielsweise in Figur 2 unten dargestellt wird zur Entleerung des dosierten Füllguts 21 in die Kapseln 22 ein Druckluftstoß erzeugt. Entsprechend wird die Zuführung 46 hierzu mit einem Überdruck beaufschlagt.

Die Zuführung 46 ist radial beweglich relativ zu der Dosierkammer 28 a, 28 b ausgebildet. In der Position gemäß Figur 3, der üblichen Arbeitsposition während des Abfüllvorgangs, drückt die Zuführung 46 den Filter 32 gegen die Unterseite der Dosierkammer 28 a, 28 b. Dies kann beispielsweise mittels Federkraft erfolgen und dient zum Abdichten zwischen Zuführung 46, Filter 32 und Dosierkammer 28 a, 28 b. Im Ausführungsbeispiel ist der Filter 32 verbunden auch mit denjenigen Filterbereichen, welche sich unterhalb einer beispielsweise radial um 90° versetzten weiteren Dosierkammer 28 a, 28 b befinden. Bevorzugt sind alle Filterbereiche unter sämtlichen Dosierkammern 28 a, 28 b des Dosierrads 29 miteinander verbunden. Der Filter 32 und somit sämtliche Filterbereiche unterhalb der Dosierkammern 28 a, 28 b sind bewegbar ausgebildet. Im Ausführungsbeispiel gemäß den Figuren 3 und 4 lässt sich der Filter 32 um die Rotationsachse des Dosierrads 29 entlang des Umfangs weiter bewegen. Hierzu ist ein Transportmittel 43 vorgesehen. Das Transportmittel 43 umfasst im Ausführungsbeispiel zwei Rollen 47, 48. Diese sind mit einer Verzahnung 49 miteinander verbunden. Die Rolle 47 dient als Abwickelrolle. Dort sind noch frische, noch nicht benutzte bzw. solche Bereiche, die noch nicht unterhalb der Dosierkammern 28 a, 28 b angeordnet waren, aufgewickelt. Das andere Ende des Filters 32 ist entlang des kompletten Innenumfangs der Dosierhülle 42 mit der Rolle 48 verbunden, die als Aufwickelrolle fungiert. Die Rolle 48 wickelt benutzte Filterbereiche auf, also solche Bereiche, die bereits an der Unterseite der Dosierkammer 28 a, 28 b angeordnet waren und aufgrund von beispielsweise Pulveranbackungen nicht mehr gasdurchlässig und daher nicht mehr für einen ordnungsgemäßen Füllbetrieb zu gebrauchen sind.

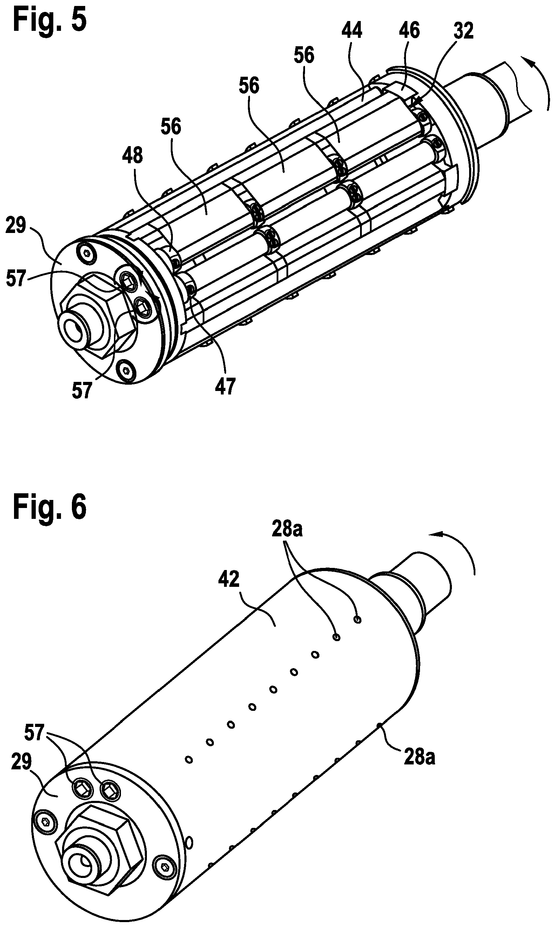

Um den Filter 32 unterhalb der Dosierkammern 28 a, 28 b faltenfrei und bündig anzuordnen, ist der Filter 32 zu spannen. Hierzu sind entsprechende Spannmittel 44 vorgesehen. Diese sind beispielsweise an der Innenseite der Dosierhülle 42 angeordnet. Die radial zum Mittelpunkt des Dosierrads 29 ragenden Flächen gelangen mit dem Filter 32 so in Kontakt, dass dadurch der Filter 32 gespannt wird. Hierzu ist insbesondere eine Aufhängung 45 vorgesehen, mit der dieses Außenteil des Spannmittels 44 frei beweglich mit der Dosierhülle 42 verbunden ist. Vorzugsweise handelt es sich hierbei um eine kardanische Aufhängung 45. Um eine ausreichende Spannung auf den Filter 32 zu erzeugen, sind beispielsweise entsprechende federnde Elemente (Federn, Luftkissen etc.) als Teil der Aufhängung 45 vorgesehen wie in den Figuren 3, 4 dargestellt. Insbesondere durch die freie kardanische Aufhängung 45 können eventuelle Montagefehler oder Inhomogenitäten des Filters 32 einfach ausgeglichen werden. Die Spannmittel 44 sind vorzugsweise jeweils zwischen zwei benachbarten Zuführungen 46 angeordnet. Die Spannmittel 44 erstrecken sich vorzugsweise über die gesamte Breite des Filters 32, die sich an der Breite des Dosierrads 29 orientiert mit einer Vielzahl nebeneinander angeordneten Dosierkammern 28 a, 28 b wie auch in Figur 6 näher gezeigt.

In der Figur 4 ist die Transportstellung des Filters 32 gezeigt. Hierzu werden die Zuführungen 46 in radialer Richtung 54 von der Dosierhülle 42 entfernt. Dadurch wird der Filter 32 nicht mehr mit der Innenseite der Dosierhülle 42 geklemmt und wird frei beweglich in einer Bewegungsrichtung 52. Durch eine entsprechende Ansteuerung des Transportmittels 43, beispielsweise bestehend aus den Rollen 47, 48 wird der Filter 32 weiterbewegt. Bereits verbrauchte Bereiche des Filters 32 werden auf der Rolle 48 aufgewickelt. Entsprechend werden neue Bereiche des Filters 32 von der Rolle 47 abgewickelt. Durch die Verzahnung 49 kann die Bewegung der beiden Rollen 47, 48 synchronisiert werden.

In der Darstellung gemäß Figur 5 ist das Dosierrad 29 ohne Dosierhülle 42 gezeigt. Im wesentlichen erstreckt sich der Filter 32 komplett über die gesamte Breite des Dosierrads 29. Beispielhaft sind drei zueinander parallele Filterbahnen 56 gezeigt, die sich in Umfangsrichtung erstrecken. Wesentlich hierbei ist, dass die Filterbahnen 56 so ausgebildet sind, dass sie sämtliche Bereiche der Dosierkammern 28 a, 28 b abdecken. Die Rollen 47, 48 verlaufen ebenfalls über die gesamte Breite des Dosierrads 29 von einer Stirnseite zur anderen. An einer Stirnseite ist zumindest eine Durchführung 57 vorgesehen zum Antrieb des Transportmittels 43, beispielsweise zum Antrieb zumindest einer der Rollen 47, 48. Im Ausführungsbeispiel sind zwei Durchführungen 57 vorgesehen für jede der Rollen 47, 48. Die Bewegung der Rollen 47, 48 erfolgt gegenläufig wie mit den Pfeilen angedeutet. Sowohl der Anfang wie auch das Ende der Filterbahnen 56 sind mit den Rollen 47, 48 verbunden, sodass ein Aufwickeln der verbrauchten Filterbereiche sowie ein Abwickeln der unverbrauchten Filterbereiche erfolgen kann. Mehrere und deshalb schmälere Filterbahnen 56 haben den Vorteil, dass sich Inhomogenitäten im Filter 32, Montagefehler oder Fertigungsungenauigkeiten auf die Gleichmäßigkeit der Filterspannung nicht so stark auswirken. Prinzipiell könnte jedoch auch nur eine einzige Filterbahn 56 vorgesehen sein. Auch zwei oder mehrere Filterbahnen 56 sind prinzipiell möglich. Die Spannmittel 44 sind in geeigneter Weise so anzuordnen, dass die gewünschte Spannung sämtlicher Filterbahnen 56 in den Bereichen der Dosierkammern 28 a, 28 b zuverlässig erreicht wird.

Figur 6 ist zu entnehmen, wie bei dem Ausführungsbeispiel gemäß Figur 5 die verschiedenen Filterbahnen 56 und sonstigen Komponenten von der Dosierhülle 42 umgeben werden. Dabei sind entlang der Längsrichtung des Dosierrads 29 eine Vielzahl von Dosierkammern 28 a, 28 b auf einer Linie angeordnet, sodass mehrere Kapseln 22 gleichzeitig befüllt werden können, vorzugsweise entsprechend der Anzahl der Aufnahmen 31, 32 im Kapselhalter 30.

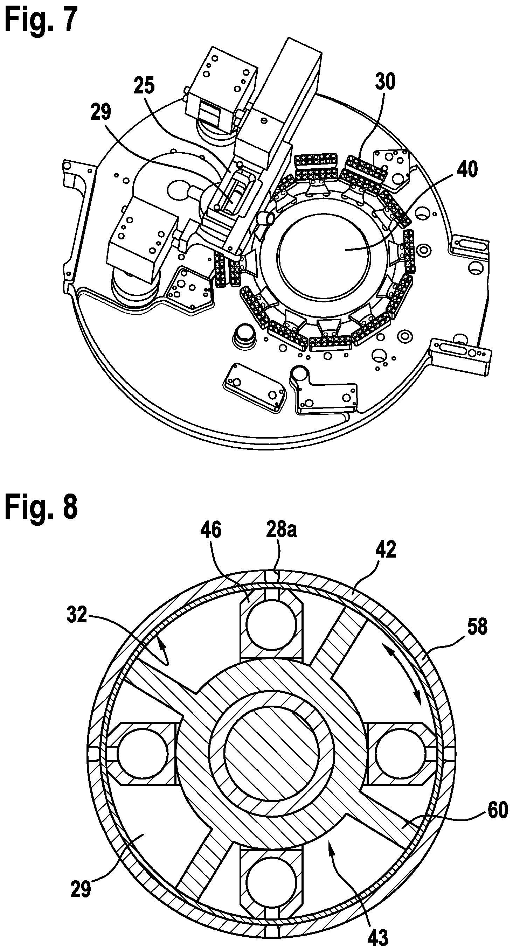

In Figur 7 ist dargestellt, wie die Füllvorrichtung 25 mit dem Dosierrad 29 in der Vorrichtung 20 zum Abfüllen integriert ist. Im Wesentlichen ist die Rotationachse des Dosierrads 29 tangential zum Stationsrad 40 angeordnet, also parallel zur Längsachse des daran angeordneten Kapselhalters 30.

Bei dem alternativen Ausführungsbeispiel gemäß Figur 8 umfasst das Dosierrad 29 ein Transportmittel 43, welches als Transportkreuz 60 ausgebildet ist. Das Transportmittel 43 ist mit dem Filter 32 verbunden. Der Filter 32 ist in diesem Ausführungsbeispiel als Filterring 58 ausgeführt. Die Außenseite des Filterrings 58 fluchtet mit der Innenseite der Dosierhülle 42. Die Innenseite des Filterrings 58 ist mit Armen des Transportkreuzes 60 verbunden. Das Transportmittel 43 ist in der Lage, den Filter 32 relativ zu der Dosierkammer 28 a, 28 b zu bewegen. Das Transportkreuz 60 ist mittig gelagert. Beispielhaft erfolgt eine Bewegung des Filters 32 in Rotationsrichtung des Dosierrads 29. Der Filter 32 könnte beispielsweise steif ausgebildet sein.

Beispielsweise könnte der Filter 32 aus einem gesinterten Werkstoff oder aus Drahtgewebe bestehen. Jedoch auch Gewebefilter wären denkbar. Besonders bevorzugt handelt es sich um einen dünnen gewebten Filter 32. Der Filter 32 könnte einstückig ausgebildet sein. Alternativ könnte der Filter 32 auch aus mehreren Einzelteilen bestehen, beispielsweise mehreren Filterbahnen 56. Die Filterbahnen 56 könnten jeweils mit zumindest einer der Rolle 47, 48 oder mit beiden Rollen 47, 48 verbunden sein.

In den Ausführungsbeispielen kann der Filter 32 exemplarisch in radialer Richtung bzw. in Umfangsrichtung bezogen auf die Drehrichtung des Dosierrads 29 bewegt werden. Alternativ wäre jedoch denkbar, den Filter 32 beispielsweise in anderer Richtung zu bewegen wie beispielsweise entlang der Längsachse des Dosierrads 29. Wesentlich ist, dass das Transportmittel 43 dazu ausgebildet ist, den Filter 32 so zu verschieben, dass neue, gasdurchlässige Bereiche des Filters 32 unterhalb der Dosierkammer 28 a, 28 b angeordnet werden.

Die generelle Idee lässt sich auch bei anderen Füllprinzipien einsetzen, bei denen beispielsweise kein Dosierrad, sondern beispielsweise eine Dosierscheibe, verwendet ist. Als Dosiermittel könnte somit beispielsweise ein Dosierrad 29 oder eine Dosierscheibe verwendet sein oder sonstige Formen, die geeignet sind, um Dosierkammern 28 a, 28 b zur Verfügung zu stellen.

Die Vorrichtung zum Abfüllen von insbesondere pulverförmigem Füllgut wird bevorzugt in der Verpackungstechnik eingesetzt zum Abfüllen und Verpacken von Pharmazeutika in Kapseln 22. Jedoch auch andere Schüttgüter wie Pellets oder Ähnliches können gleichermaßen abgefüllt werden. Die Verwendung ist hierauf jedoch nicht eingeschränkt.

## Patentansprüche

1. Vorrichtung zum Abfüllen von Füllgut, umfassend zumindest ein Dosierrad (29), zumindest eine Dosierkammer (28a, 28b), zumindest einen Behälter (27) zur Abgabe eines zu dosierendes Füllguts (21) in die Dosierkammer (28 a, 28 b), zumindest einen Filter (36), der an der Dosierkammer (28 a, 28 b) angeordnet ist, wobei der Filter (36) für das Füllgut (21) nicht durchlässig ausgebildet ist und für ein gasförmiges Medium durchlässig ausgebildet ist, zumindest eine Zuführung (46) für das gasförmige Medium, um durch das gasförmige Medium über den Filter (36) auf das in der Dosierkammer (28 a, 28 b) zu dosierende Füllgut (21) einzuwirken, **dadurch gekennzeichnet, dass** zumindest ein Transportmittel (43) vorgesehen ist, um den Filter (36) so zu verschieben, dass ein weiterer Bereich des Filters (36) an die Unterseite der Dosierkammer (28 a, 28 b) gelangt.

2. Vorrichtung nach Anspruch 1, **dadurch gekennzeichnet, dass** der Filter (36) in einer radialen und/oder axialen Richtung bezogen auf eine Rotationsachse des Dosierrads (29) verschiebbar ausgebildet ist.

3. Vorrichtung nach einem der vorhergehenden Ansprüche, **dadurch gekennzeichnet, dass** zumindest ein Spannmittel (44) für den Filter (36) vorgesehen ist.

4. Vorrichtung nach einem der vorhergehenden Ansprüche, **dadurch gekennzeichnet, dass** das Transportmittel (43) zumindest eine Rolle (47,48), vorzugsweise eine Abwickelrolle (47) und/oder eine Aufwickelrolle (48) umfasst.

5. Vorrichtung nach einem der vorhergehenden Ansprüche, **dadurch gekennzeichnet, dass** der Filter (36) mit den Rollen (47,48) verbunden ist.

6. Vorrichtung nach einem der vorhergehenden Ansprüche, **dadurch gekennzeichnet, dass** die Zuführung (46) bewegbar ausgebildet ist, um den Filter (36) gegen die Dosierkammer (28 a, 28 b) zu drücken und gegen den Filter (36) keinen Druck auszuüben bei einer Verschiebung des Filters (36) durch das Transportmittel (43).

7. Vorrichtung nach einem der vorhergehenden Ansprüche, **dadurch gekennzeichnet, dass** zumindest eine Verzahnung (49) zwischen den beiden Rollen (47, 48) vorgesehen ist.

8. Vorrichtung nach einem der vorhergehenden Ansprüche, **dadurch gekennzeichnet, dass** das Spannmittel (44) frei beweglich, vorzugsweise über eine kardanische Aufhängung, mit dem Dosierrad (29) verbunden ist.

9. Vorrichtung nach einem der vorhergehenden Ansprüche, **dadurch gekennzeichnet, dass** das Spannmittel (44) mit zumindest einem federnden Element (45) versehen ist.

10. Vorrichtung nach einem der vorhergehenden Ansprüche, **dadurch gekennzeichnet, dass** der Filter (36) zumindest bandförmig ausgebildet ist, insbesondere mehrere Filterbänder (56) umfasst.

## Claims

1. A device for filling filling material, comprising at least one metering wheel (29), at least one metering chamber (28a, 28b), at least one container (27) for delivering a filling material (21) to be metered into the metering chamber (28a, 28b), at least one filter (36), which is arranged at the metering chamber (28a, 28b), wherein the filter (36) is realized so as to be non-permeable for the filling material (21) and permeable for a gaseous medium, at least one feeder (46) for the gaseous medium, in order to act, by means of the gaseous medium, via the filter (36), upon the filling material (21) to be metered into the metering chamber (28a, 28b), **characterized in that** at least one transport means (43) is provided to displace the filter (36) such that a further region of the filter (36) reaches the underside of the metering chamber (28a, 28b).

2. The device as claimed in claim 1, **characterized in that** the filter (36) is realized so as to be displaceable in a radial and/or axial direction with respect to an axis of rotation of the metering wheel (29).

3. The device as claimed in either one of the preceding claims, **characterized in that** at least one tensioning means (44) for the filter (36) is provided.

4. The device as claimed in any one of the preceding claims, **characterized in that** the transport means (43) comprises at least one roller (47, 48), preferably a wind-off roller (47) and/or a wind-on roller (48).

5. The device as claimed in any one of the preceding claims, **characterized in that** the filter (36) is connected to the rollers (47, 48).

6. The device as claimed in any one of the preceding claims, **characterized in that** the feeder (46) is designed to be movable, in order to press the filter (36) against the metering chamber (28a, 28b), and not to exert any pressure against the filter (36) when the filter (36) is being displaced by the transport means (43).

7. The device as claimed in any one of the preceding claims, **characterized in that** at least one toothing (49) is provided between the two rollers (47, 48).

8. The device as claimed in any one of the preceding claims, **characterized in that** the tensioning means (44) is connected in a freely movable manner to the metering wheel (29), preferably via a cardanic suspension.

9. The device as claimed in any one of the preceding claims, **characterized in that** the tensioning means (44) is provided with at least springing element (45).

10. The device as claimed in any one of the preceding claims, **characterized in that** the filter (36) is realized at least in the form of a belt, in particular comprising a plurality of filter belts (56).

## Revendications

1. Dispositif de versement d'un produit de remplissage, comprenant au moins une roue de dosage (29), au moins une chambre de dosage (28a, 28b), au moins un contenant (27) pour la distribution d'un produit de remplissage (21) à doser dans la chambre de dosage (28 a, 28 b), au moins un filtre (36), qui est disposé sur la chambre de dosage (28 a, 28 b), dans lequel le filtre (36) est réalisé de manière non perméable au produit de remplissage (21) et est réalisé de manière perméable à un milieu gazeux, au moins une amenée (46) pour le milieu gazeux, afin d'agir au moyen du milieu gazeux par l'intermédiaire du filtre (36) sur le produit de remplissage (21) à doser dans la chambre de dosage (28 a, 28 b), **caractérisé en ce qu'**au moins un moyen de transport (43) est prévu, afin de déplacer le filtre (36) de sorte qu'une autre zone du filtre (36) parvient sur la face inférieure de la chambre de dosage (28 a, 28 b).

2. Dispositif selon la revendication 1, **caractérisé en ce que** le filtre (36) est réalisé de manière à pouvoir se déplacer dans une direction radiale et/ou axiale par rapport à un axe de rotation de la roue de dosage (29).

3. Dispositif selon l'une quelconque des revendications précédentes, **caractérisé en ce qu'**au moins un moyen de serrage (44) est prévu pour le filtre (36) .

4. Dispositif selon l'une quelconque des revendications précédentes, **caractérisé en ce que** le moyen de transport (43) comprend au moins un rouleau (47, 48), de préférence un rouleau dérouleur (47) et/ou un rouleau enrouleur (48).

5. Dispositif selon l'une quelconque des revendications précédentes, **caractérisé en ce que** le filtre (36) est relié aux rouleaux (47, 48).

6. Dispositif selon l'une quelconque des revendications précédentes, **caractérisé en ce que** l'amenée (46) est réalisée de manière mobile, afin de presser le filtre (36) contre la chambre de dosage (28 a, 28 b) et de n'exercer aucune pression contre le filtre (36) lors d'un déplacement du filtre (36) par le moyen de transport (43).

7. Dispositif selon l'une quelconque des revendications précédentes, **caractérisé en ce qu'**au moins une denture (49) est prévue entre les deux rouleaux (47, 48).

8. Dispositif selon l'une quelconque des revendications précédentes, **caractérisé en ce que** le moyen de serrage (44) est relié à la roue de dosage (29) de manière mobile librement, de préférence par l'intermédiaire d'une suspension à cardan.

9. Dispositif selon l'une quelconque des revendications précédentes, **caractérisé en ce que** le moyen de serrage (44) est pourvu d'au moins un élément à ressort (45).

10. Dispositif selon l'une quelconque des revendications précédentes, **caractérisé en ce que** le filtre (36) est réalisé au moins en forme de bande, en particulier comprend plusieurs bandes de filtration (56) .
